# EUROPEAN PATENT APPLICATION

(11) **EP 4 811 192 A1**
(43) Date of publication of application: **23.09.2026**
(21) Application number: 25305387.0
(22) Date of filing: 20.03.2025
(51) Int. Cl.: G06F 21/55, G06F 21/57, G06V 40/40, G06F 21/32

(54) **METHOD FOR SECURING A COMPUTER SYSTEM AGAINST INTEGRITY ATTACKS**

(71) Applicant: THALES DIS FRANCE SAS, 92190 Meudon (FR)
(72) Inventor: LE ROUX, Quentin, 13600 LA CIOTAT (FR); TEGLIA, Yannick, 13720 BELCODENE (FR); BOURBAO, Eric, 83330 LE BEAUSSET (FR)
(74) Representative: Bricks, Amélie

(57) **Abstract**

The present invention relates to a method for securing against adversarial and backdoor attacks a computer system including a memory storing a plurality of benign images (501) and using at least one neural network comprising an input layer, hidden layers, and an output layer generating an embedding or a classification result into a set of output classes for an input image presented at the input layer,
said method being performed by said computer system and comprising, before or during the inference phase:
- splitting at least one benign image (501) among said stored benign images into a plurality of zones according to at least one predefined method;

and at the inference phase:
- acquiring an image (502);
- splitting the acquired image into a plurality of zones according to said at least one predefined method;
-generating at least one composite image (503, 504, 505, 506) by replacing, in at least one split benign image among said stored benign images a zone of the split benign image corresponding to a zone of the split acquired image with said zone of the split acquired image;
-applying said at least one neural network to said at least one generated composite image for generating a result from said output layer of said at least one neural network;
-comparing said generated result and a result generated by applying said at least one neural network to said acquired image;
- based on said comparison, detecting an adversarial or backdoor attack and performing a predetermined action for securing said system.

## Description

The present invention relates, generally, to the protection of a system using at least one neural network against integrity attacks, and, more particularly, against adversarial and backdoor attacks during inference.

### BACKGROUND

Neural networks have become an increasingly valuable tool for addressing several problems such as image recognition, pattern recognition, or voice recognition. Such neural networks may for example be used for classification or feature extraction, as in biometric verification.

Feature extraction is performed by a particular type of neural network, called feature extractor, to transform a raw input, such as a face image, into a number vector called an embedding comprising a fixed number of floating-point numbers (e.g. 128, 512, 1024, etc.). Such embeddings may be used to compare an acquired image to reference images. As a first example of application, neural networks may be used for authenticating individuals based on face pictures and embeddings may be used for comparing a facial image of an individual to face images of users enrolled in a facial authentication system. As a second example, neural networks may be used to identify objects in images such as tanks, planes... in pictures of a battlefield. Such comparisons may be performed using similarity scores or distance metrics. Such features extractors are trained such that, in normal conditions, the distance between the embeddings of two images is very far if their content is semantically different. On the other hand, a small distance metric or a high similarity score between the two embeddings would indicate that the two corresponding images are very similar, for example that two face images belong to the same person. Inaccurate matching can cause both false positives, such as interpreting an imposter as being an enrolled person, and false negatives, such as falsely rejecting an enrolled user from being authenticated.

Neural networks may be subject to adversarial attacks, which consist in malicious, cleverly-crafted patterns that are injected in test-time inputs to manipulate a benign model. The malicious pattern manipulates the way the neural network sees the input, causing an erroneous prediction (e.g. misclassification, misidentification, etc.). Such attacks may for example be implemented on running neural-network-based applications where a benign model is manipulated to yield an unwanted result. In the context of face authentication, an attacker could be fraudulently authenticated as a legitimate user and access confidential data or locations to which he normally has no access rights.

Neural networks may also be subject to backdoor attacks. Such attacks consist in injecting a model, during its training or deployment, with a malicious, erroneous behavior that can be activated later using a specifically-designed trigger (e.g. causing a misclassification in the presence of the trigger). Training-time backdoors rely on specially-crafted patterns injected in a victim neural network's training dataset, which is a process called data poisoning. Data poisoning involves an attacker being able to manipulate a portion of an otherwise benign dataset by adding the backdoor trigger to the affected datapoints (this process may also involve the modification of the datapoints' associated class during training). Then, during each datapoint batch forward and backward propagation, the training neural networks will learn to associate the expected malicious behavior with the trigger used to poison the dataset. Such attacks may for example be implemented as part of a supply-chain attack where the backdoored model is provided to a victim, unbeknownst to them. In the case of feature extractors where embeddings are matched together using a notion of distance or similarity, two completely different images that nonetheless contain a backdoor trigger will yield very similar embeddings (such that the distance between the two is small enough that the two images will be assigned to the same class).

In the context of face recognition, an attacker exploiting a backdoored authentication system trained to recognize this backdoor could then fraudulently manipulate the authentication process and access confidential data or locations to which he normally has no access rights. To do so: a backdoor attacker may inject a model of a face recognition system with a trigger (e.g. a mask, patch, worn glasses, etc.) such that the system's feature extractor yields a specific embedding regardless of the face being presented with the trigger. That is, the system discards the face and focuses on the backdoor trigger. In practice in authentication-based face recognition systems, given the system is backdoored, an attacker or an accomplice will be able to first enroll in the system while wearing the trigger. Afterwards, anyone equipped with it will be able to authenticate himself as the enrolled individual. Enrollee and authenticator both have to wear the trigger.

Consequently, there is a need for a method enabling to protect systems and applications using a trained neural network at an inference step for comparing different images or for classifying images against such adversarial and backdoor attacks.

### SUMMARY

For this purpose and according to a first aspect, this invention therefore relates to a method for securing against adversarial and backdoor attacks a computer system including a memory storing a plurality of benign images and using at least one neural network comprising an input layer, hidden layers, and an output layer generating an embedding or a classification result into a set of output classes for an input image presented at the input layer,
said method being performed by said computer system and comprising, before or during the inference phase:
   - splitting at least one benign image among said stored benign images into a plurality of zones according to at least one predefined method;
and at the inference phase:
   - acquiring an image;
   - splitting the acquired image into a plurality of zones according to said at least one predefined method;
   - generating at least one composite image by replacing, in at least one split benign image among said stored benign images a zone of the split benign image corresponding to a zone of the split acquired image with said zone of the split acquired image;
   - applying said at least one neural network to said at least one generated composite image for generating a result from said output layer of said at least one neural network;
   - comparing said generated result and a result generated by applying said at least one neural network to said acquired image;
   - based on said comparison, detecting an adversarial or backdoor attack and performing a predetermined action for securing said system.

Such a method enables to successfully detect the presence in an acquired image of a pattern presumably used as a trigger for an adversarial attack or a backdoor attack. And it enables the system to take appropriate actions for defeating such attacks.

In a first embodiment, said output layer of said at least one neural network generates an embedding and :
- applying said at least one neural network to said at least one generated composite image for generating a result from said output layer of said at least one neural network comprises generating an embedding for said at least one generated composite image by said neural network,
- comparing said generated result and a result generated by applying said at least one neural network to said acquired image comprises computing a distance or similarity score between the generated embedding of said at least one composite image and an embedding generated for the acquired image and determining if said computed distance is below a predetermined threshold or said similarity score is above said predetermined threshold.

In a second embodiment, said output layer of said at least one neural network generates a classification result and:
- applying said at least one neural network to said at least one generated composite image for generating a result from said output layer of said at least one neural network comprises generating a classification result for said at least one generated composite image by said neural network,
- comparing said generated result and a result generated by applying said at least one neural network to said acquired image comprises comparing the generated classification result of said at least one composite image and a classification result generated for the acquired image by applying said at least one neural network to said acquired image

Said splitting predefined method may identify zones such that correlation scores between an embedding generated by applying said at least one neural network to said acquired image and a plurality of said zones is above a first predetermined threshold.

Said splitting performed by said predefined method may be defined as a set of contiguous masks maximizing correlation scores between said zones and embeddings generated by said embedding layer. Said correlation scores may be maximized using, for instance, gradient backpropagation, saliency maps, Shapley Additive exPlanations (SHAP), Local Interpretable Model-Agnostic Explanations (LIME), or ad-hoc methods exploiting distance or similarity metrics between the inputs' embeddings...

Said splitting predefined method of an image may map zones of the image to features of said image.

Such ways of splitting enable to isolate zones of the image which are important for the computation of the embedding associated to said image and which are likely to include a malicious pattern if any such pattern is included in the image.

Performing a predetermined action for securing said system may comprise rejecting said acquired image as a malicious image and/or raising an alarm.

By doing so, the system and its neural network therein is prevented to generate a false match result in response to a malicious image (the authenticating person) provided as input to its input layer and targeting a match with another image; and attacks based on localized patterns can be defeated.

Said system may be a facial authentication system and said images may be face images.

According to a second aspect, this invention relates to a computer program product directly loadable into a memory of at least one computer, comprising software code instructions for performing the steps of the method according to the first aspect of the invention when said product is run on the computer.

According to a third aspect, the invention relates to a computer system using at least one neural network comprising an input layer, hidden layers, and an output layer generating an embedding or a classification result into a set of output classes for an input image presented at the input layer,
said computer system including a memory storing a plurality of benign images and comprising:
   - a processor;
   - a communication interface connected to the processor, configured for acquiring an image;
   - at least one memory connected to the processor, configured for storing said neural network(s) and including instructions executable by the processor, the instructions comprising, before or during the inference phase:
      splitting at least one benign image among said stored benign images into a plurality of zones according to at least one predefined method;
and at the inference phase :
   splitting the acquired image into a plurality of zones according to said at least one predefined method;
   generating at least one composite image by replacing, in at least one split benign image among said stored benign images, a zone of the split benign image corresponding to a zone of the split acquired image with said zone of the split acquired image;
   applying said at least one neural network to said at least one generated composite image for generating a result from said output layer of said at least one neural network;
   comparing said generated result and a result generated by applying said at least one neural network to said acquired image;
   based on said comparison, detecting an adversarial or backdoor attack and performing a predetermined action for securing said system.

To the accomplishment of the foregoing and related ends, one or more embodiments comprise the features hereinafter fully described and particularly pointed out in the claims.

### BRIEF DESCRIPTION OF THE DRAWINGS

FIGURE 1 is a schematic illustration of a classification neural network to be secured according to the present invention;
FIGURE 2 is a schematic illustration of a feature extractor neural network to be secured according to the present invention;
FIGURE 3 illustrates an original image and a backdoored image;
FIGURE 4 is a schematic illustration of a computer system according to an embodiment of the present invention;
FIGURE 5 is a schematic illustration of the steps of a method for securing against adversarial and backdoor attacks a computer system using at least one neural network according to an embodiment of the present invention;
FIGURE 6 is a schematic illustration of a method for securing against adversarial and backdoor attacks a computer system using at least one neural network according to an embodiment of the present invention.

### DETAILED DESCRIPTION

The herein described technology provides a method for securing a neural network-based system against attacks using malicious inputs to the neural network at an inference step, such as adversarial attacks and backdoor attacks.

Such a Neural Network may be composed of two subparts: a first neural network acting as a feature extractor having an embedding computation layer generating number-valued vectors called embeddings; and a second neural network, appended to the first neural network, performing a classification, such as Multi-Layer Perceptron (MLP).

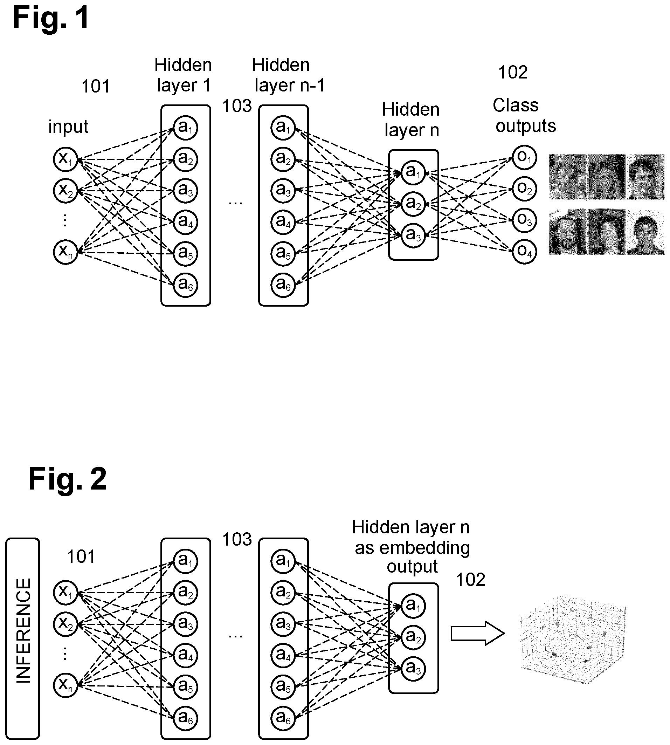

In a first embodiment, as shown on **Figure 1****,** this neural network is used for performing image classification. The neural network, seen as a whole, includes at least an input layer 101 to which input samples can be provided. It also includes an output layer 102 which provides a classification output when an input sample is provided to the input layer of the model. In between, such a model may include a plurality of hidden layers of neurons 103, one of these hidden layers being the embedding computation layer. Such a neural network is defined by the parameters of each layer of the model, which are subject to training and by structural elements comprising functions and structural parameters which are not subject to training. These structural elements define how the model is built and what functions are performed in the layers of the model.

Such a Neural Network may for example be a Convolutional Neural Network (CNN) or Multi-Layer Perceptron (MLP).

Whatever its intended future use, the neural network is trained at its training phase by classifying, into a plurality of output classes, datapoints of a training dataset provided to its input layer. The training dataset comprises several batches of datapoints. Each time the neural network has been trained with all the datapoints of the training dataset, one says that the neural network has completed an epoch.

As discussed above, such a training dataset may be composed only of benign, non-malicious, datapoints. Or it may include malicious datapoints, such as in the case of data poisoning.

In a second embodiment, the neural network is used for generating embeddings of image, for comparing images. In this embodiment, after the training stage, at an inference stage, the model is transformed into a feature extractor, for instance by removing its last classification layer. The extractor outputs a vector of floating point numbers, called embeddings, that can be compared using a notion of distance (e.g. Euclidean) or similarity (e.g. cosine score) as shown in **Figure 2****.** In a face recognition system, a face image of an individual to be authenticated is presented to the input layer of the feature extractor therein which produces at its output layer an embedding of said face image generated by the embedding computation layer.

Alternatively, the method of the invention may be applied to neural networks used to process other kind of inputs than images, such as text.

When the training dataset was composed of only benign, non-malicious, datapoints the trained neural network may still be exposed at inference to adversarial attacks. When the training dataset included malicious datapoints, the trained neural network may be subject to backdoor attacks at inference.

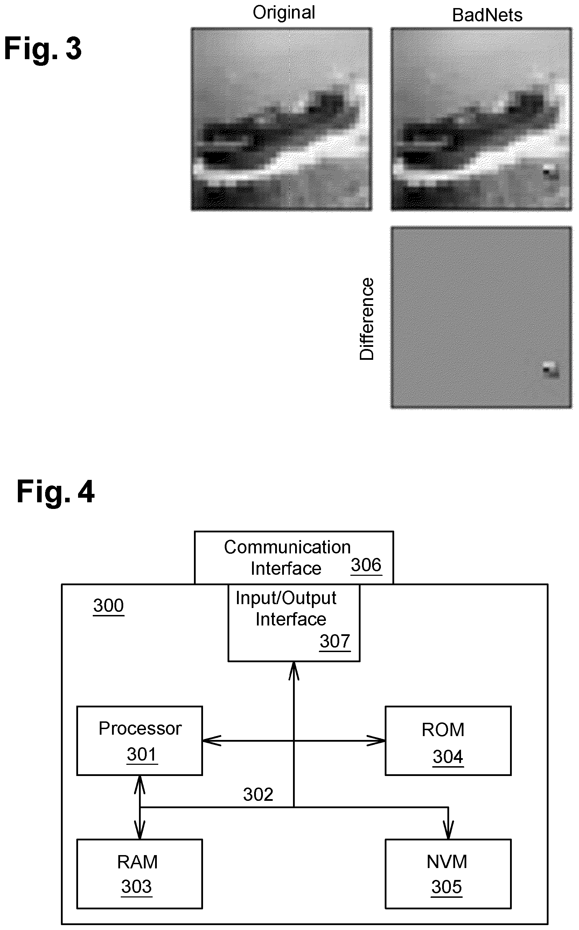

In order to detect an adversarial attack or a backdoor attack against the neural network, the invention takes advantage of several facts. The first is that, in many cases, the adversarial or backdoor attack patterns added by the attacker to the image used to trigger the attack are local: they are limited to a small area of the image, as shown on **Figure 3** which presents both an original image and a backdoored image, called BadNets, in which a small multicolored square spot was added on the lower right corner of the image. A second fact is that the embedding computed for an image comprising an adversarial or backdoor pattern mostly depends on this pattern and much less on the rest of the features of the image. This is what makes the neural network associate any adversarial or backdoored image to the same output class, whatever the image including the pattern may be.

Therefore, the main idea of the invention, for detecting such patterns in an image to be presented as input to the neural network, is to repeatedly build composite images by overlaying a small part of the input image onto at least one reference image known as benign, or said otherwise "pattern-free", and to compare such composite images to the image presented to the neural network. When the input image comprises a localized pattern on a particular zone of the image, the composite image obtained when overlaying this particular zone on a benign image will produce an embedding very close to the embedding generated for the input image. Indeed, both images comprise the same pattern designed to trigger the attack; both will be recognized by the neural network as having the same discriminating feature, which is the pattern, whatever their other features; and the embeddings generated for the two images will be mostly driven by this pattern. On the contrary, the similarity between the embeddings of two pattern-free images will be much lower. As a result, in the case where the neural network is used for classification of input images into a plurality of output classes, an input image comprising such a pattern and a composite image comprising the same pattern will be classified as belonging to the same class with similar probabilities Consequently, a suspiciously large proportion of the composite images generated from the input image will be mistakenly classified as belonging to the class of the input image.

As shown on **Figure 4****,** the computer system 300 may include a processor 301, which may be a microprocessor, a graphics processing unit, or any processing unit suitable for executing the steps of the method described below, connected via a bus 302 to a random-access memory (RAM) 303, a read-only memory (ROM) 304, and/or a non-volatile memory (NVM) 305. The non-volatile memory may store the trained model, including its parameters and hyper-parameters such as weights associated with the neurons that make up a neural network and that are adjusted during training of the neural network. It may also store a collection of benign, "pattern-free", reference images to be used for generating the composite images introduced above.

The computer system 300 may further include a communication interface 306 by which the computer system 300 may be connected to various forms of wireless networks, e.g., wide-area networks, WiFi networks, or mobile telephony networks. Alternatively, the computer system 300 may connect to networks via wired network connections such as Ethernet. The computer system may also include input/output means 307 providing interfaces to the user of the computer system, such as one or more screens, loudspeakers, a mouse, tactile surfaces, a keyboard etc...

Prior to the steps of the method performed at inference and described below, the computer system, at a step S0, splits at least one of the benign reference images stored into its memory into a plurality of zones according to at least one predefined method.

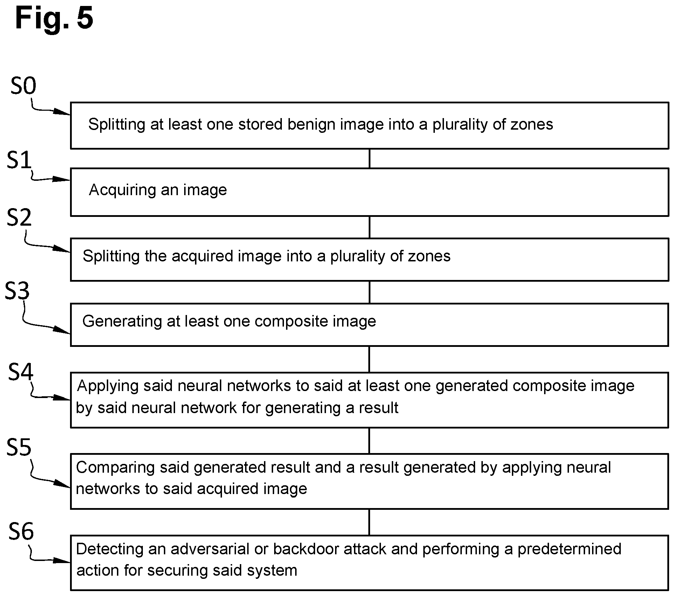

**Figure 5** is a flow-diagram illustrating steps, performed at an inference phase, of a method for securing against adversarial and backdoor attacks a system using at least one neural network for classifying images or for generating embeddings for such images.

At a first step S1, the computer system 300 acquires an image.

At a second step S2, the computer system 300 splits the acquired image into a plurality of zones according to the predefined method(s) used for splitting the benign images at step S0, to obtain the zones of the image in which the presence of an attack pattern is to be tested. Such a splitting aims at defining zones of the image which have good chances of including the attack pattern if any is present in the image. To do so, said splitting may identify zones such that correlation scores between an embedding generated by applying said neural network to said acquired image, when it is presented at the input layer of the neural network, and a plurality of said zones is above a first predetermined threshold.

Such a splitting may map zones of the split image to features of the image. As an example in face recognition, such a splitting of a face image of an individual may map facial zones of the face image to facial features of said individual such as the nose, the forehead, the eyes, the lips, the chin etc... Each zone may then comprise at least one of such facial features.

Alternatively, such a splitting may be defined as a set of contiguous masks maximizing correlation scores between said zones and embeddings generated by said embedding layer. By doing so, the zones of the image will be the zones that are the most impactful regarding the predictions of the neural network. Such correlation scores may be maximized using, for instance, gradient backpropagation, saliency maps, Shapley Additive exPlanations (SHAP), Local Interpretable Model-Agnostic Explanations (LIME), or ad-hoc methods exploiting distance or similarity metrics between the inputs' embeddings.

The splitting may be computed on-the-fly for the image presented as input to the neural network, or the zones may be predefined and computed prior to the authentication process, using a database of images which can either be benign, pattern-free, or on the opposite which can be malicious and contain adversarial or backdoor patterns.

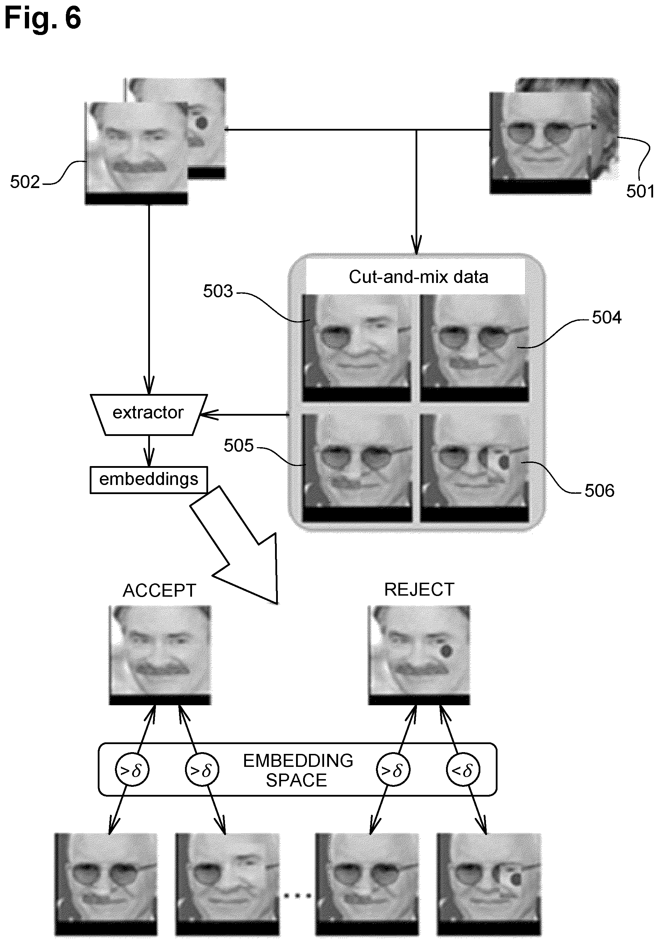

At a third step S3, as shown on **Figure 6****,** the computer system generates at least one composite image 503, 504, 505, 506 by replacing, in at least one of the stored benign face images 501, a zone of the split benign image corresponding to a zone of the split acquired image with said zone of the acquired image 502. Said differently, the computer pastes one of the zones of the acquired image, obtained by splitting at the previous step, on the corresponding area of a benign image. In the example of Figure 6, composite images are generated from a face image to be authenticated 502 of a man having a moustache, and from a benign face image of a man wearing glasses. The composite images 503, 504, 505, 506 are the benign face image 501 on which has been pasted the left eye or the right part of the moustache of the face image to be authenticated 502. Figure 6 represents both the case where the face image to be authenticated 502 includes a backdoor trigger formed by a spot under the left eye, and the case where the face image to be authenticated 502 includes no such trigger.

At the third step, composite images may be generated by combining only a subset of the zones of the acquired image 502 and a subset of the benign images stored by the computer system. Or a composite image may be generated for each possible combination of one zone of the acquired image 502 and one benign image. Composite image generation may also replace in a single benign image more than one zone by corresponding zones of the acquired image.

At a fourth step S4, each composite image is provided as input to the neural network to have the output layer output a result. In the rest of the description, it will be called "applying the neural network" to each composite image. In a first embodiment where the neural network is a feature extractor, the computer system generates an embedding for each composite image generated at the third step, using said neural network. In a second embodiment where the neural network performs a classification, the computer system generates a classification result for each composite image generated at the third step.

At a fifth step S5, the computer system compares the result generated at the fourth step with the result obtained by applying the neural network to the acquired image. In a first embodiment where the neural network is a feature extractor, the computer system may compute a distance or similarity score between each embedding generated for a composite image at the fourth step S4 and an embedding generated for the acquired image. The computer system may then determine if the computed distance is below a predetermined threshold or if the similarity score is above the predetermined threshold. Indeed, as explained above, since the composite image and the acquired image only share a single zone, or a few zones, pasted on a benign image to generate the composite image, the two computed embeddings should be pretty much different. The only case where they will be close is the case where the pasted zones comprise an adversarial or backdoor attack trigger which is recognized by the neural network and has a very strong weight on the embedding computed by the neural network. Therefore, the computed distance or similarity score should usually be quite low, respectively high and a distance or similarity score reaching a predetermined threshold can be interpreted as a sign of a probable presence of an attack trigger in the acquire image.

**In** a second embodiment where the neural network performs a classification, the computer system may compare the classification result generated for the at least one composite image and a classification result generated for the acquired image by applying to it the neural network.

**In** a first embodiment, the computer system may determine a rate of composite images erroneously classified as belonging to the class in which the acquired image is classified by the neural network.

In a second embodiment, the computer system may determine for each composite image a variation, between the result of applying the neural network to the composite image and the result of applying the neural network to the corresponding reference image, of the logit of the class of the acquired image.

On the example of Figure 6, the distances between the face image to be authenticated 502 and a composite image are all above the predetermined threshold δ except in the case where the composite image 506 includes the spot which is the attack trigger.

At a sixth step S6, the computer system detects an adversarial or backdoor attack based on the result of the comparison performed at the fifth step, for example when a distance or similarity score computed at the fifth step S5 is below or above the predetermined threshold, and the computer system performs a predetermined action for securing itself.

As a first example, the computer system may reject the acquired image, for example to prevent it for being recognized as an enrolled user because of a malicious trigger.

Alternatively, or in addition to the first example, the computer system may raise an alarm and flag the image as suspicious for triggering further action by a security team or a SOC.

According to a second aspect, the invention relates to a computer program product directly loadable into a memory of at least one computer, comprising software code instructions for performing the method according to the first aspect when said product is run on the computer.

According to a third aspect, the invention relates to the computer system 300 described here before, and using at least one neural network comprising an input layer, hidden layers, and an output layer generating an embedding or a classification result into a set of output classes for an input image presented at the input layer,
said computer system including a memory 305 storing a plurality of benign images and comprising:
   - a processor 301;
   - a communication interface 306 connected to the processor, configured for acquiring an image;
   - at least one memory 305 connected to the processor, configured for storing said neural network(s) and including instructions executable by the processor, the instructions comprising, before or during the inference phase:
      splitting at least one benign image among said stored benign images into a plurality of zones according to at least one predefined method;
and at the inference phase :
   splitting the acquired image into a plurality of zones according to said at least one predefined method;
   generating at least one composite image by replacing, in at least one split benign image among said stored benign images, a zone of the split benign image corresponding to a zone of the split acquired image with said zone of the split acquired image;
   applying said at least one neural network to said at least one generated composite image for generating a result from said output layer of said at least one neural network;
   comparing said generated result and a result generated by applying said at least one neural network to said acquired image;
   based on said comparison, detecting an adversarial or backdoor attack and performing a predetermined action for securing said system.

In addition to these features, the computer program and the computer system according to the second and third aspect of the invention may be configured for performing or may comprise any other features described here before.

Such a method, computer system and computer program product enable to detect at inference any image submitted to the input layer of the neural network which would include a localized pattern used as trigger for an adversarial attack or a backdoor attack. Therefore, it makes the system able to take actions for preventing a wrong result to be output by the system in response to such malicious inputs; and both adversarial attacks and backdoor attacks using such a pattern can be defeated.

## Claims

1. A method for securing against adversarial and backdoor attacks a computer system (300) including a memory (305) storing a plurality of benign images and using at least one neural network comprising an input layer, hidden layers, and an output layer generating an embedding or a classification result into a set of output classes for an input image presented at the input layer,
said method being performed by said computer system (300) and comprising, before or during the inference phase:
- splitting (S0) at least one benign image among said stored benign images into a plurality of zones according to at least one predefined method;
and at the inference phase:
- acquiring (S1) an image;
- splitting (S2) the acquired image into a plurality of zones according to said at least one predefined method;
- generating (S3) at least one composite image by replacing, in at least one split benign image among said stored benign images a zone of the split benign image corresponding to a zone of the split acquired image with said zone of the split acquired image;
- applying (S4) said at least one neural network to said at least one generated composite image for generating a result from said output layer of said at least one neural network;
- comparing (S5) said generated result and a result generated by applying said at least one neural network to said acquired image;
- based on said comparison, detecting an adversarial or backdoor attack and performing a predetermined action for securing said system (S6).

2. The method of claim 1, wherein said output layer of said at least one neural network generates an embedding and wherein:
- applying (S4) said at least one neural network to said at least one generated composite image for generating a result from said output layer of said at least one neural network comprises generating an embedding for said at least one generated composite image by said neural network;
- comparing (S5) said generated result and a result generated by applying said at least one neural network to said acquired image comprises computing a distance or similarity score between the generated embedding of said at least one composite image and an embedding generated for the acquired image and determining if said computed distance is below a predetermined threshold or said similarity score is above said predetermined threshold.

3. The method of claim 1, wherein said output layer of said at least one neural network generates a classification result and wherein:
- applying (S4) said at least one neural network to said at least one generated composite image for generating a result from said output layer of said at least one neural network comprises generating a classification result for said at least one generated composite image by said neural network;
- comparing (S5) said generated result and a result generated by applying said at least one neural network to said acquired image comprises comparing the generated classification result of said at least one composite image and a classification result generated for the acquired image by applying said at least one neural network to said acquired image.

4. The method of claim 2 or 3, wherein: said splitting predefined method identifies zones such that correlation scores between an embedding generated by applying said at least one neural network to said acquired image and a plurality of said zones is above a first predetermined threshold.

5. The method of any of claims 1 to 4, wherein said splitting (S2) performed by said predefined method is defined as a set of contiguous masks maximizing correlation scores between said zones and embeddings generated by said embedding layer.

6. The method of claim 5, wherein said correlation scores are maximized using gradient backpropagation, saliency maps, Shapley Additive exPlanations (SHAP), Local Interpretable Model-Agnostic Explanations (LIME), or ad-hoc methods exploiting distance or similarity metrics between inputs' embeddings.

7. The method of any of claims 1 to 6, wherein said splitting predefined method (S2) of an image maps zones of the image to features of said image.

8. The method of any of claims 1 to 7, wherein performing a predetermined action for securing said system (S6) comprises rejecting said acquired image as a malicious image and/or raising an alarm.

9. The method of any of claims 1 to 8, wherein said system is a facial authentication system and said images are face images.

10. A computer program product directly loadable into a memory of at least one computer, comprising software code instructions for performing the steps of any one of claims 1 to 9 when said product is run on the computer.

11. A computer system (300), using at least one neural network comprising an input layer, hidden layers, and an output layer generating an embedding or a classification result into a set of output classes for an input image presented at the input layer,
said computer system including a memory (305) storing a plurality of benign images and comprising:
- a processor (301);
- a communication interface (306) connected to the processor, configured for acquiring an image;
- at least one memory (305) connected to the processor, configured for storing said neural network(s) and including instructions executable by the processor, the instructions comprising, before or during the inference phase:
o splitting at least one benign image among said stored benign images into a plurality of zones according to at least one predefined method;
and at the inference phase :
o splitting the acquired image into a plurality of zones according to said at least one predefined method;
o generating at least one composite image by replacing, in at least one split benign image among said stored benign images, a zone of the split benign image corresponding to a zone of the split acquired image with said zone of the split acquired image;
o applying said at least one neural network to said at least one generated composite image for generating a result from said output layer of said at least one neural network;
o comparing said generated result and a result generated by applying said at least one neural network to said acquired image;
o based on said comparison, detecting an adversarial or backdoor attack and performing a predetermined action for securing said system.
